# EUROPEAN PATENT SPECIFICATION

(11) **EP 3 689 100 B1**
(45) Date of publication and mention of the grant of the patent: **28.10.2026**
(21) Application number: 18765615.2
(22) Date of filing: 05.09.2018
(51) Int. Cl.: H04W 88/06, H04W 48/18

(54) **PRIORITIZATION METHOD FOR RADIO ACCESS TECHNOLOGIES USED FOR WIRELESS DATA COMMUNICATION**
PRIORISIERUNGSVERFAHREN FÜR FUNKZUGANGSTECHNOLOGIEN ZUR DRAHTLOSEN DATENKOMMUNIKATION
PROCÉDÉ DE PRIORISATION DE TECHNOLOGIES D'ACCÈS RADIO UTILISÉES DANS LA COMMUNICATION DE DONNÉES SANS FIL

(30) Priority: 29.09.2017 SE 1730268
(43) Date of publication of application: 05.08.2020
(73) Proprietor: Sony Group Corporation, Tokyo 108-0075 (JP)
(72) Inventor: LJUNG, Rickard, 256 56 Helsingborg (SE)
(74) Representative: Kraus & Lederer PartGmbB
(86) International application number: PCT/EP2018/073801
(87) International publication number: WO 2019/063250

(56) References cited:
- NOKIA ET AL: "UE capability structure and coordination aspects for MR-DC", vol. RAN WG2, no. Qingdao, China; 20170627 - 20170629, 26 June 2017 (2017-06-26), XP051301354, Retrieved from the Internet <URL:http://www.3gpp.org/ftp/Meetings_3GPP_SYNC/RAN2/Docs/> [retrieved on 20170626]
- NOKIA ET AL: "SMARTER UE/5G device", vol. SA WG1, no. Jeju, South Korea; 20170213 - 20170217, 20 February 2017 (2017-02-20), XP051240370, Retrieved from the Internet <URL:http://www.3gpp.org/ftp/tsg_sa/WG1_Serv/TSGS1_77_Jeju/docs/> [retrieved on 20170220]
- ERICSSON: "Mobility between LTE and NR for inactive UEs", vol. RAN WG2, no. Berlin, Germany; 20170821 - 20170825, 20 August 2017 (2017-08-20), XP051317796, Retrieved from the Internet <URL:http://www.3gpp.org/ftp/Meetings_3GPP_SYNC/RAN2/Docs/> [retrieved on 20170820]

## Description

### TECHNICAL FIELD

The present application generally refers to techniques of performing wireless data communication based on a plurality of radio access technologies. In certain embodiments, the application refers to prioritizing at least one radio access technology from a plurality of radio access technologies for wireless data communication.

### BACKGROUND

Multimode user equipments adapted for 3GPP systems enable a flexible use based on the underlying environmental conditions, as they support a variety of different radio access technologies (RAT), such as GSM, WCDMA, LTE and 5G/NR. Such underlying environmental conditions may e.g. refer to a specific geolocation, and a flexible use of specific RATs at such a specific geolocation may for example be advantageous due to an improved power balance or an improved security level of the user equipment.

A user equipment (UE) being operated in idle mode usually is in control of its own cell reselection procedures, and the UE can select the RAT that is appropriate to keep active or inactive for candidate cell section.

A UE operating in connected mode, however, needs to follow radio network control signaling for neighbor cell measurements and handover. Hence, if a UE has signaled a certain RAT support in its UE capability signaling, the network expects that the UE is capable of conducting neighbor cell measurements, reporting and handover for cells using that radio access technology.

For both idle mode and active mode scenarios there could be situations where the UE doesn't have any specific benefit of using a certain RAT. This could be the case, for example, when there is a relatively new RAT entering the market, and using the new RAT would be non-preferred from the UE perspective in terms of e.g. power consumption in the UE, or when there is a huge difference in radio access capabilities between the RATs, e.g., if the expected data rate of an old legacy RAT is so low that the UE would not prefer to use that RAT.

Hence, the UE may know that using a certain RAT is not quite interesting from the UE perspective, but according to existing 3GPP signaling there is no obvious method to signal such information to the network.

Non-patent literature - Nokia et al.: "UE capability structure and coordination aspects for MR-DC", 3GPP Draft; R2- 1706859; vol. RAN WG2, Qingdao, China; 20170627 - 20170629 - discloses UE capability structure and coordination aspects for Multi-RAT Dual Connectivity. It mainly focuses on, within DC scheme, how the master node may be able to estimate whether LTE/NR tight interworking should be attempted for a given configuration, especially with the working assumption that case the master and secondary nodes are not required to understand/comprehend each other's capabilities, and hence may not be able to estimate a priori, the expected performance of each other.

Non-patent literature - Nokia et al.: "SMARTER - UE/5G device", 3GPP Draft; S1-171391; vol. SA WG1, Jeju, South Korea; 20170213 - 20170217 - discloses 3GPP access network selection. Specifically, it discloses a UE can provide assistance information (e.g., SST, i.e., Slice/Service Type) to enable the network to select one or more network slices. The UE uses a list of PLMN/RAT combinations for PLMN selection. The selection shall be performed among any available PLMN/RAT combinations, identified through their respective PLMN identifier and Radio Access Technology identifier, in a prioritised order. The priority order may, subject to operator policies, be provisioned in an Operator Controlled PLMN Selector lists with associated RAT identifiers, stored in the UE. Optionally, the 5G system shall support, subject to operator policies, a User Controlled PLMN Selector list stored in the - UE, allowing the user to specify preferred PLMNs with associated RAT identifier in priority order.

At present, widely used existing solutions include user-based manual deactivation of RATs. In such known solutions, a UE may deactivate a RAT by performing a restart of the cellular modem, or similar procedure of deactivation and re-activation of the radio access communication based on the user-based control. However, such an approach is considered less user-friendly and further may in certain circumstances not be suited to be adapted to specific environmental conditions in real time.

### SUMMARY

As a matter of consequence, there is a need to dynamically control the provision of RATs to a user equipment, which may enable high quality wireless data communication at specific environmental conditions.

It is an objective of the present application to provide for a method for use in a user equipment for performing wireless data communication, which offers a high-quality wireless data communication to a user equipment in preferably any environmental condition.

It is a further objective of the present application to provide for a method for use in a network node of a wireless network, which supports wireless data communication of a user equipment in that the user equipment performs a high-quality wireless data communication in preferably any environmental condition.

A method for use in a user equipment and a method for use in a network node of a wireless network are provided according to the independent claims. Further embodiments are defined in the dependent claims.

According to an embodiment, a method for use in a user equipment is disclosed.

The user equipment is adapted to communicate with a wireless network using a plurality of RATs. The method comprises prioritizing at least one RAT from the plurality of RATs. The method further comprises transmitting uplink control signaling indicative of the prioritized at least one RAT to the wireless network. Prioritizing the at least one radio access technology supported by the user equipment is based on a network access state comprising one of: an idle network access state, an inactive network access state and an active network access state

Such an approach may be based on the finding that based on adequate criteria, the user equipment itself automatically selects most favorable RATs at any time and at any location and transmits information regarding these selected most favorable RATs to the wireless network, wherein the latter may control such a selection from a network point of view. Thus, a dynamic adaption of favorable RATs in real time is possible, without requiring any manual user input at least in some scenarios.

For example, the uplink control signaling may be transmitted using the prioritized at least one RAT or may be transmitted using a non-prioritized RAT. If the non-prioritized RAT is employed for communication between the user equipment and the network, the techniques described herein may facilitate adaptation of the RAT used for communicating between the user equipment and the network by at least attempting to switch to the prioritized at least one RAT. One or more appropriate network actions may be taken in this regard.

According to another embodiment, a method for use in a network node of a wireless network connectable to a user equipment is disclosed. Hereby, the user equipment is adapted to communicate with a wireless network using on a plurality of RATs. The method comprises receiving, from the user equipment, uplink control signaling indicative of at least one prioritized RAT prioritized from a plurality of RATs. The method further comprises considering the at least one prioritized radio access technology when performing at least one network action associated with the user equipment. The at least one prioritized radio access technology is prioritized from the plurality of radio access technologies based on a network access state comprising one of: an idle network access state, an inactive network access state, and an active network access state.

Such an approach may be based on the finding that receiving priority related information of RATs by a network node of a wireless network enables to accept or not accept an automatic selection of most favorable RATs selected by a user equipment. If the prioritized at least one RAT is accepted, then the at least one network action may be aligned with any requirements imposed by the prioritized at least one RAT and/or requirements imposed by an attempt to switch to the prioritized at least one RAT. Otherwise, the at least one network action may be aligned with the previously employed RAT. Thus, such a method may control the performance of a dynamic adaption of most favorable RATs in real time, without requiring any manual user input at least in some embodiments.

Different types and kinds of network actions may be subject to the techniques described herein. For example, the at least one network action may be associated with establishment of a data connection between the wireless network and the user equipment using the prioritized at least one RAT. However, it is not required that in all scenarios the data connection using the prioritized at least one RAT is ultimately set up: For example, it would be possible that - while the wireless network generally accepts the prioritized at least one RAT - other reasons, e.g., a poor signal quality of a corresponding cell of the prioritized at least one RAT as indicated by subsequent cell measurements - eventually prevent establishment of the data connection using the prioritized at least one RAT. Thus, the at least one network action may be associated with the establishment or, generally, establishment attempt of the data connection using the prioritized at least one RAT. Thus, it is generally not required that - even though at least one RAT is prioritized - communication between the user equipment and the wireless network is in fact also implemented using the prioritized at least one RAT.

For example, the at least one network action may correspond to control signaling, or generally performing communication, associated with the user equipment. Thus, it is possible that communication associated with the user equipment is performed based on the prioritized at least one RAT. At the same time, it is not required that this communication or specifically the control signaling is implemented using the at least one RAT; rather, it would be possible that the communication or specifically the control signaling is implemented using a non-prioritized RAT. For example, the same RAT may be employed that is also employed for the uplink control signaling.

Further examples of network actions include paging of the user equipment (UE) which may facilitate establishment of a data connection using the prioritized at least one RAT.

Further examples of network actions include establishment of the data connection. For example, a connection setup control signaling could be communicated.

Further examples of network actions include informing the UE and/or other network nodes - e.g., other base stations - of whether the prioritized at least one RAT is accepted or not accepted.

Further examples of network actions include providing configuration data for cell measurements, e.g., in accordance with the prioritized at least one RAT.

Further examples of network actions include performing an inter-RAT hand over, e.g., to the prioritized at least one RAT. Also, a redirection of the UE to a cell operating according to the prioritized at least one RAT would be possible.

A RAT within the meaning of the present disclosure may refer to a physical connection method for a communication network, which may include one or more carriers on one or more radio frequencies, transmission protocols, framing structures, acknowledgement schemes, and/or modulation and coding schemes, etc.. A plurality of RATs may be supported by a single UE. A RAT may refer to at least one of the techniques Bluetooth, Wi-Fi, 3G, 4G, 5G and LTE.

An uplink control signaling within the meaning of the present disclosure may refer to any signaling transmitted from a UE to a network node of a wireless network, which may contribute to a control of the UE and/or the network node and/or the wireless network. Hereby, control may be based on any information with respect to a prioritization of radio access technologies. For example, Layer 2 or Layer 3 control signaling may be used, according to the Open Systems Interface (OSI) model.

In an embodiment of the method for use in a UE, the method further comprises receiving downlink control signaling from the wireless network in response to transmitting the uplink control signaling, wherein the downlink control signaling is indicative of whether the prioritized at least one RAT is accepted.

Thereby, prioritizing the at least one RAT from the plurality of RATs may additionally be controlled by the wireless network using a network point of view. Since the wireless network may comprise additional information used for controlling, whether the RATs prioritized by the UE are to be accepted or not accepted, additional influences, which are not observed by the UE, may therefore be taken into account for controlling the communication method. These may include, but are not limited to: network load for the RATs, quality of service for the RATs, etc.

In an embodiment of the method for use in a UE, the method further comprises performing data communication based on the prioritized at least one RAT and in accordance with the downlink control signaling.

Thereby, a high quality data communication may be performed by the UE based on the RATs, which are to be considered most favorable with respect to the underlying conditions and the intended use.

In an embodiment of the method for use in a UE, the method further comprises performing cell measurements in accordance with the received downlink control signaling.

Thereby, high quality cell measurements may be performed by the UE based on the RATs, which are to be considered most favorable with respect to the underlying conditions and the intended use.

In an embodiment of the method for use in a UE, the cell measurements are performed based on the prioritized at least one RAT, upon the prioritized at least one RAT being acknowledged.

Thereby, a prioritization of at least one RAT from the plurality of RATs may be confirmed, if such a prioritization is also to be considered advantageous from a network point of view and/or based on the information provided at the network.

In an embodiment of the method for use in a UE, the cell measurements are performed based on the plurality of RATs, upon the prioritized at least one RAT not being acknowledged.

Thereby, a prioritization of at least one RAT from the plurality of RATs may be avoided, if such a prioritization is to be considered disadvantageous from a network point of view and/or based on the information provided at the network.

In an embodiment of the method for use in a UE, the method further comprises receiving further downlink control signaling, wherein the further downlink control signaling comprises override data, which induce an adaption of whether the cell measurements are performed based on the prioritized at least one RAT or based on the plurality of RATs.

Thereby, the RATs used by the UE, which are based on the prioritization of the at least on RAT from the plurality of RATs, may be adapted to different environmental conditions and may therefore be flexibly used.

In an embodiment of the method for use in a UE, the prioritizing the at least one RAT is based on at least one of an energy consumption, a security level, a geolocation, a timing, a service type and a quality of service.

According to a further embodiment of the method for use in a UE, the uplink control signaling is indicative of the at least one of the energy consumption, the network access state, the security level, the geolocation, the timing, the service type, and the quality of service.

Thereby, the UE may prioritize the at least one RAT from the plurality of RATs, which is, based on the present environmental conditions of the UE, most favorable to be used with respect to any policy requirements, e.g. security or energy consumption.

The energy consumption may be associated with energy consumptions estimated for the various RATs. The security level may be associated with a level of protection of secure data communication that may be achieved for the various RATs. The security level may be associated with a level of protection of secure data communication that is considered required for specific services. Such service could be a specific service offered by the RAT, e.g. an IMS based communication, SMS, data transfer etc. Such service could also be a specific end point for the intended communication, e.g. an IP address or a specific access domain.

The geolocation may be expressed in terms of latitude and longitude or in terms of cells of the wireless network. The timing may relate to a time of the day or time of the week. The timing may relate to a duration for which communication on one or more RATs is desired. The quality of service may relate to an intended latency and/or communication reliability.

The service type may correlate with the quality of service associated with the respective service. For example, the service type may be one or more of the following: music streaming; audio streaming; video streaming; web browsing; videoconferencing; Web Real-Time Communication; database transaction; HTTP requests and/or responses; IP sessions; etc.. The service type may be associated with a specific application or a group of applications.

In an embodiment of the method for use in a UE, the uplink control signaling is included in a) a UE capability signaling and/or b) a UE uplink control signal and/or c) a RRC configuration message.

Thereby, the uplink control signal may be implemented in an established signaling technique and may therefore be included in a preferably efficient manner. Existing signaling may be re-used.

In an embodiment of the method for use in a UE, the uplink control signaling includes a list of at least one RAT which is not prioritized.

Thereby, the wireless network is informed about the radio access technologies for deactivation in a preferably simple manner.

In an embodiment of the method for use in a UE, said prioritizing of the at least one RAT is performed differently for at least two of a) the idle network access state, b) the inactive network access state and c) the active network access state of the UE.

Thereby, deactivation certain RATs may additionally take the present mode of the UE into account. Thus, an improved flexibility of the method with respect to the underlying circumstances may be achieved.

In an embodiment of the method for use in a UE, the prioritized radio access technologies comprise at least one of GSM, WCDMA, LTE, 5G, NR and WiFi.

Thereby, deactivation of RATs also refers to techniques, which are at present commonly implemented and activated in most of the UEs. Thereby, energy savings may be achieved.

In an embodiment of the method for use in a network node of a wireless network, the at least one network action comprises accepting or not accepting the prioritized at least one RAT. According to a further embodiment of the method for use in a network node of a wireless network, the method further comprises transmitting downlink control signaling to the UE in response to the uplink control signaling and indicative of whether the at least one prioritized RAT is accepted.

Thereby, the establishment of the communication in between the wireless network and the UE may be implemented with preferably simple technical means.

In an embodiment of the method for use in a network node of a wireless network, the at least one network action comprises instructing the UE to perform cell measurements based on the at least one prioritized RAT.

Thereby, a single signaling may be implemented to the method, which includes both control with respect to the deactivation of RATs and instructions with respect to the performance of cell measurements. Such means may enable a more efficient signal packaging.

In an embodiment of the method for use in a network node of a wireless network, the at least one network action comprises allocating radio resources for communicating with the UE based on the at least one prioritized RAT.

In an embodiment of the method for use in a network node of a wireless network, the method further comprising transmitting further downlink control signaling comprising override data, which induce an adaption of whether cell measurements are performed based on the prioritized at least one RAT or based on the plurality of RATs.

Thereby, deactivation of specific RATs may be adapted over time based on any modified environmental conditions.

In an embodiment of the method for use in a network node of a wireless network, the uplink control signaling is included in a) a UE capability signaling and/or b) a UE uplink control signal and/or c) a RRC con-figuration message.

Thereby, the uplink control signal may be implemented in an established signaling technique and may therefore be included in a preferably efficient manner.

In an embodiment of the method for use in a network node of a wireless network, the uplink control signaling includes a list of at least one RAT which is not prioritized.

Thereby, the wireless network is informed about the radio access technologies for deactivation in a preferably simple manner.

In an embodiment of the method for use in a network node of a wireless network, the method further comprises transmitting an inter-RAT handover command to a further network node.

Thereby, prioritization information may also be used for establishing wireless data communication with a further network node. This may be helpful where different RATs are supported by different network nodes, e.g., part of different wireless data networks.

A downlink control signaling within the meaning of the present disclosure may refer to any signaling transmitted from a network node of a wireless network to a UE, which may contribute to a control of the UE and/or the network node and/or the wireless network. Hereby, control may be based on any information with respect to a prioritization of radio access technologies. Layer 2 or Layer 3 control signaling may be used.

A cell measurement within the meaning of the present disclosure may refer to any procedure for achieving information of wireless network cells located in the proximity of a UE. Hereby, the UE may perform the cell measurement. The cell measurement performed by the UE may serve to estimate the quality of the respective wireless communication network.

The above summary is merely intended to give a short overview over some features. The invention is defined by the appended independent claims and further embodiments are described by the dependent claims.

### BRIEF DESCRIPTION OF THE DRAWINGS

The above and other elements, features, steps and characteristics of the present disclosure will be more apparent from the following detailed description of embodiments with reference to the following figures:
Figure 1 schematically illustrates a network performing wireless data communication between a base station and a UE.
Figure 2a schematically illustrates the UE in greater detail.
Figure 2b schematically illustrates the base station in greater detail.
Figure 3 represents a flowchart of a method for use in a UE.
Figure 4 represents a flowchart of a further method for use in a UE.
Figure 5 represents a flowchart of a further method for use in a UE.
Figure 6 represents a flowchart of a further method for use in a network node of a wireless network.
Figure 7 represents a flowchart of a further method for use in a network node of a wireless network.
Figure 8 schematically illustrates a signaling diagram of a UE, a first network node of a first wireless network and a second network node of a second wireless network referring to Figure 4 and Figure 6.

### DETAILED DESCRIPTION OF THE DRAWINGS

In the following, embodiments of the invention will be described in detail with reference to the accompanying drawings. The invention is defined by the appended independent claims and further embodiments are described by the dependent claims.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of wireless communication in a wireless network are disclosed. For example, the wireless network may be a cellular network comprising multiple cells, wherein each cell is defined by one or more BSs. Example network architectures include the 3GPP LTE architecture. According to 3GPP LTE, a wireless channel is defined according to the evolved UMTS Terrestrial Radio Access (EUTRAN) RAT. Similar techniques can be readily applied to various kinds of 3GPP-specified architectures, such as Global Systems for Mobile Communications (GSM), Wideband Code Division Multiplex (WCDMA), General Packet Radio Service (GPRS), Enhanced Data Rates for GSM Evolution (EDGE), Enhanced GPRS (EGPRS), Universal Mobile Telecommunications System (UMTS), and High Speed Packet Access (HSPA), and corresponding architectures of associated cellular networks. In particular, such techniques may be applied in 3GPP NB-IoT or eMTC networks and 3GPP New Radio (NR) networks. Furthermore, respective techniques may be readily applied to various kinds of non-3GPP-specified architectures, such as Bluetooth, satellite communication, IEEE 802.11x Wi-Fi technology, etc. In various examples, it is possible to prioritized between RATs associated with one or more of the aformentioned network types.

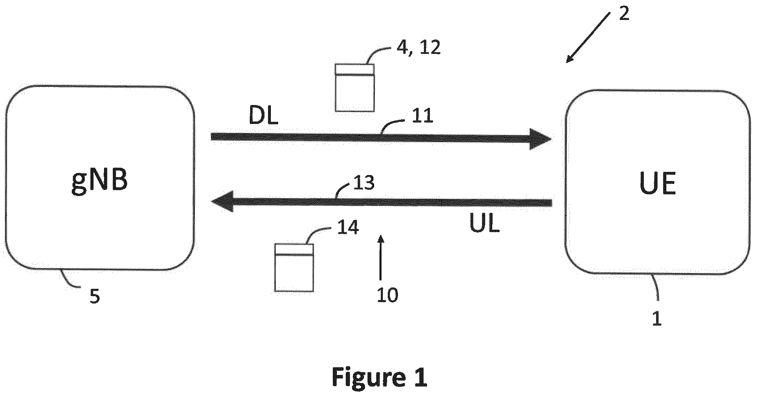

Figure 1 schematically illustrates a wireless network 2 for performing wireless data communication that may benefit from the techniques disclosed herein. The network 2 may support a plurality of RATs, which may comprise at least one of GSM, WCDMA, LTE, 5G, NR and WiFi. Uplink control signaling 3 and downlink control signaling 4 may also be communicated.

The wireless network 2 for wireless data communication includes a UE 1 and a network node (gNB) 5. As an example, such a UE 1 might be one of the following: a smartphone; a cellular phone; a table; a note-book; a computer; a smart television; a Machine Type Communication (MTC) device; an enhance MTC (eMTC) device; an Internet of Things (IoT) device; a Narrowband IOT (NB-IoT) device; a sensor; an actuator; etc. Network node 5 might also be one of the following: a Node-B (NB); an evolved Node-B (e-NB) in 3GPP LTE; or a gNB as in 3GPP NR; etc. In particular, where multiple RATs are supported, different types of network nodes - specifically different types of base stations - may be used.

A wireless data link 10 provided for wireless data communication is established between the UE 1 and the gNB 5. The wireless data link 10 may implement a downlink (DL) data channel 11. The DL data channel 11 can be used for transmitting downlink (DL) data 12 from the gNB 5 towards the UE 1. These DL data 12 may include downlink control signaling 4. The wireless data link 10 may also implement an uplink (UL) data channel 13 for transmitting uplink (UL) data 14 from the UE 1 towards the gNB 5.

A UE operating in connected mode needs to follow radio network control signaling for neighbor cell measurements and handover. Hence, if a UE has signaled a certain radio access technology (RAT) support in its UE capability signaling the network expects that the UE is capable of conducting neighbor cell measurements, reporting and handover for cells using that radio access technology.

For both idle mode and active mode scenarios, there could be situations where the UE doesn't have any specific benefit of using a certain RAT. This could be the case, for example, when there is a relatively new RAT entering the market, and using the new RAT would be non-preferred from the UE perspective in terms of e.g. power consumption in the UE, or when there is a huge difference in radio access capabilities between the RATs, e.g., if the expected data rate of an old legacy RAT is so low that the UE would not prefer to use that RAT.

Hence, the UE may know that using a certain RAT is not quite interesting from the UE perspective, but according to existing 3GPP signaling there is no obvious method to signal such information to the network.

According to certain reference implementations, it is possible that a user of the UE 1 manually excludes one or more RATs that are, in principle, supported by an interface of the UE 1. For example, the user may exclude use of 3GPP 3G technology, while use of 3GPP 4G and 5G technology is allowed. In this regard, in such reference implementations, a capability of the UE 1 may be signaled to the gNB 5. This may include transmission of a UE capability control message. The UE capability control message may be indicative of the supported RATs, e.g., depending amongst other factors such as hardware capability on the user input. An example of such a capability control message for LTE can be found in 3GPP Technical Specification (TS), 36.331, V14.0.0 (2016-09), section 5.6.3. An example of how UE capabilities can be specified can be found in the LTE specifications TS 36.306 V14.0.0 (2016-09), section 4. For example, according to such reference implementations, a reset of the connection with the network, including disconnecting the UE 1 and reconnecting the UE 1, may be required to indicate a change in prioritization and/or to implement a change in prioritization of RATs. This may be time consuming, increase latency of data transmission, etc.

To manually exclude one or more RATs may also be a too coarse RAT control since the non-prioritized RAT should perhaps only be down prioritized in certain use cases instead of all the time. From a network perspective it is not a favorable situation if UEs tend to deactivate data efficient RATs for long periods of time.

Also, when using manual RAT deactivation, such switching may cause signaling overhead if modified frequently.

Hereinafter, techniques are described which help to mitigate such problems.

To overcome above-mentioned deficiencies, embodiments of this disclosure propose to dynamically handle the use of different RATs for the new 5G networks, which may operate in so-called non standalone mode. In such mode, the new 5G radio is very tightly integrated with 4G/LTE access, and the use of 5G radio can be controlled very flexibly from a network perspective. In other words, such embodiments propose adding signaling to indicate a UE preference on RAT activation/deactivation. In some embodiments, the proposed indication may control the network usage of different RATs for different UE states or services.

The idea behind such embodiments is to introduce a new function into the 3GPP RAN standard, specifically controlling dynamic activation and deactivation of RATs. The control could be made differently for the different UE states (e.g. RRC states such as idle, inactive and active) or if other states are known/controlled by the network (e.g. attended traffic, unattended traffic etc). The network is then expected to control the function, but since the primary target is to avoid user based manual on/off switching, the function should be initiated by a UE indicator signal.

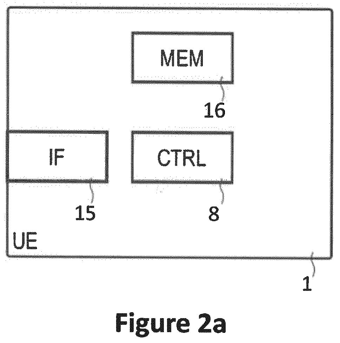

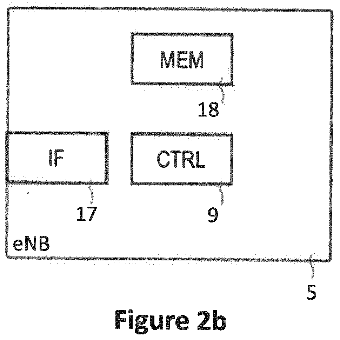

Figure 2a schematically illustrates the UE 1. The UE 1 includes an interface 15. For example, the interface 15 may include an analog front end and a digital front end. In some examples, the interface 15 may include a main receiver and a low-power receiver (not illustrated in Fig. 2). Each one of the main receiver and the low-power receiver may include an analog front end and a digital front end, respectively. The UE 1 further includes control circuitry 8, e.g., implemented by means of one or more processors and software. The control circuitry 8 may also be at least partly implemented in hardware. For example, program code to be executed by the control circuitry 8 may be stored in a non-volatile memory 16. In the various examples disclosed herein, various functionality may be implemented by the control circuitry 8, e.g. prioritizing 110, 210, 310 at least one RAT from the plurality of RATs; transmitting 120, 220, 320 uplink control signaling 3 indicative of the prioritized at least one RAT to the wireless network 2; receiving 130, 230, 330 downlink control signaling from the wireless network 2 in response to transmitting 120, 220, 320 the uplink control signaling 3; etc..

FIG. 2b schematically illustrates the network node 5. The network node 5 includes an interface 17. For example, the interface 17 may include an analog front end and a digital front end. The network node 5 further includes control circuitry 9, e.g., implemented by means of one or more processors and software. For example, program code to be executed by the control circuitry 9 may be stored in a non-volatile memory 18. In the various examples disclosed herein, various functionality may be implemented by the control circuitry 9, e.g. receiving 410, 510 from the UE 1, uplink control signaling 3 indicative of at least one prioritized RAT prioritized from a plurality of RATs; performing 420, 520 one or more network actions, e.g., to trigger establishment of a data connection with the UE 1 based on the prioritized at least one RAT; etc..

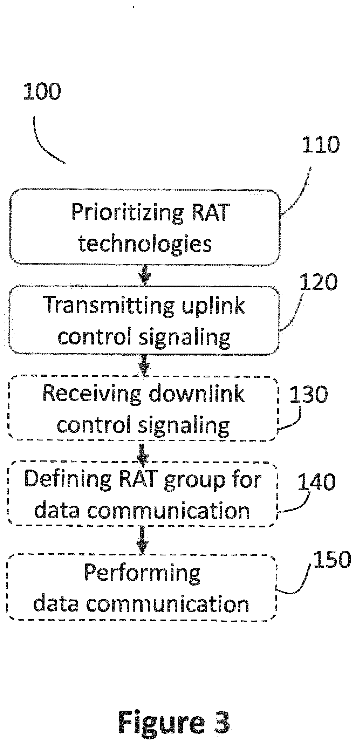

Figure 3 represents a claimed method 100 for use in a UE 1 and/or a first device 6 according to various examples. With respect to this method 100, the UE 1 is adapted to communicate with the wireless network 2 using a plurality RATs. Such a prioritized RAT may e.g. be associated with at least one of GSM, WCDMA, LTE, NR, and WiFi.

At 110, the UE 1 prioritizes at least one RAT from the plurality of RATs. Prioritizing is based on a network access state. This may be further based on at least one of an energy consumption, a network access state, a security level, a geolocation, a timing and a quality of service. Prioritizing 110 may also take different modes of the UE 1 into account. As an example, prioritizing 110 of the at least one RAT may be performed differently for at least two of a) an idle network access state, b) an inactive network access state and c) an active network access state of the UE 1. Examples of an idle network access state include Radio Resource Control (RRC) idle. In an active network access state, a data connection may be maintained between the UE 1 and the network 2. The data connection may include one or more bearers, e.g., a default bearer and one or more dedicated bearers. In the inactive network access state, the UE 1 may at least temporarily be operated in a sleep state in which the receiver is shut down. Discontinuous reception cycles may be employed. In the idle network state the data connection may be released; the UE 1 may be paged which corresponds to performing a network action associated with establishment of the data connection.

Subsequently at 120, the uplink control signaling 3 indicative of the prioritized at least one RAT **is** transmitted to the wireless network 2. Hereby, the uplink control signaling 3 may be indicative of the at least one of the energy consumption, the network access state, the security level, the geolocation, the timing and the quality of service. Further, the uplink control signaling 3 may be included in a) a UE capability signaling and/or b) a UE uplink control signal and/or c) a RRC configuration message. Further, the uplink control signaling 3 may include a list of at least one RAT technology, which is not prioritized.

Subsequently at 130, the downlink control signaling 4 may be received from the wireless network 2 in response to transmitting 120 the uplink control signaling 3. In this context, the downlink control signaling 4 may be indicative of whether the prioritized at least one RAT is accepted.

Subsequently at 140, the RAT group for data communication may be defined based on the received downlink control signaling 4.

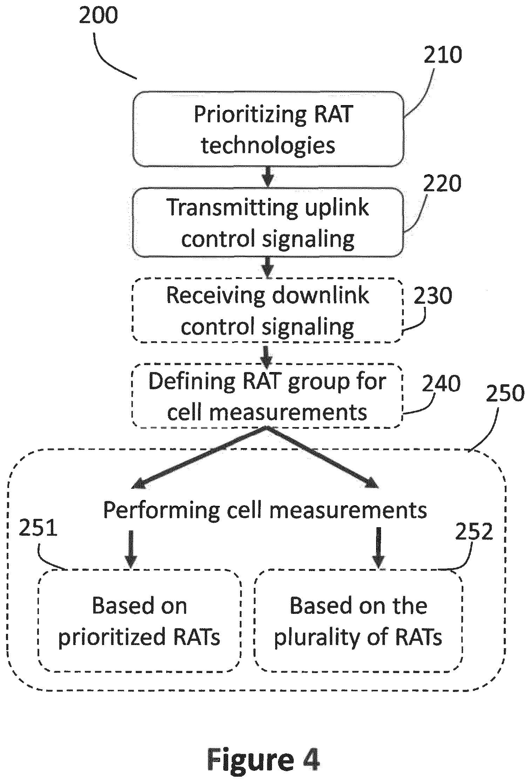

Subsequently at 150, data communication based on the prioritized at least one RAT and in accordance with the downlink control signaling 4 may be performed. In other scenarios, cell measurements may be initially performed before deciding whether to perform the data communication using the prioritized at least one RAT. This is illustrated in connection with Figure 4.

Figure 4 represents a flowchart of a further method 200 for use in a UE 1 according to various examples. Hereby, prioritizing RAT technologies 210, transmitting uplink control signaling 220 and receiving downlink control signaling 230 may be performed similarly or even equally to prioritizing RAT technologies 110, transmitting uplink control signaling 120 and receiving downlink control signaling 130 of the method 100 according to Figure 3.

Subsequently at 240, an RAT group for performing cell measurements may be defined.

Subsequently at 250, cell measurements may be performed in accordance with the received downlink control signaling 4. These cell measurements may be performed differently. In case that the prioritized at least one RAT is acknowledged, cell measurements may be performed 251 based on the prioritized at least one RAT. In case that the prioritized at least one RAT is not acknowledged, cell measurements may be performed 252 based on the plurality of RATs, i.e., for all RATs and not selectively for the prioritized at least one RAT.

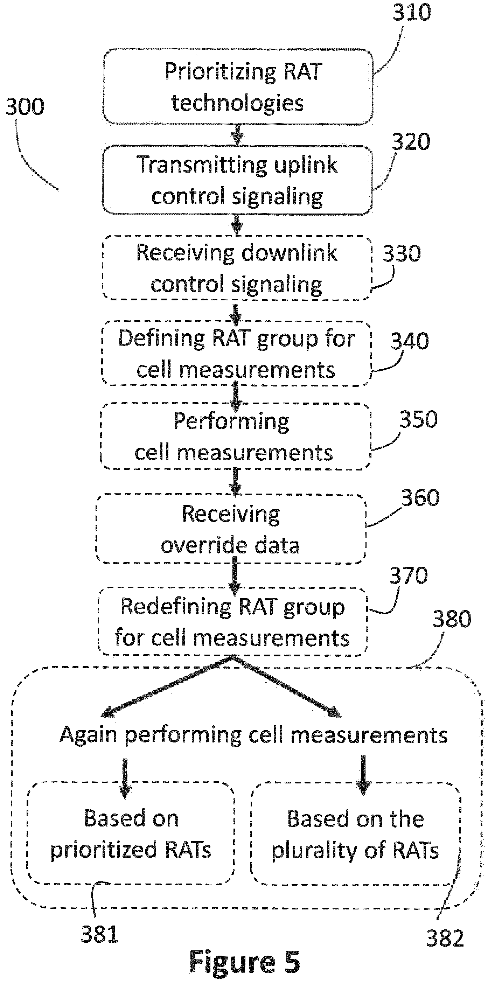

Figure 5 represents a flowchart of a further method 300 for use in a UE according to various examples. Hereby, prioritizing RAT technologies 310, transmitting uplink control signaling 320, receiving downlink control signaling 330, defining the RAT group for performing cell measurements 340 and performing cell measurements 350 may be performed similarly or even equally to prioritizing RAT technologies 210, transmitting uplink control signaling 220, receiving downlink control signaling 230, defining the RAT group for performing cell measurements 240 and performing cell measurements 250 of the method 200 according to Figure 4.

Subsequently at 360, further downlink control signaling 4 may be received. Such further downlink control signaling 4 may comprise override data and may refer to an environmental change of the UE 1.

Subsequently at 370, the existing RAT group for performing cell measurements may be redefined.

Subsequently at 380 and based on the received override data, an adaption of whether the cell measurements may be performed based on the prioritized at least one RAT 381 or based on the plurality of RATs 382 may be induced.

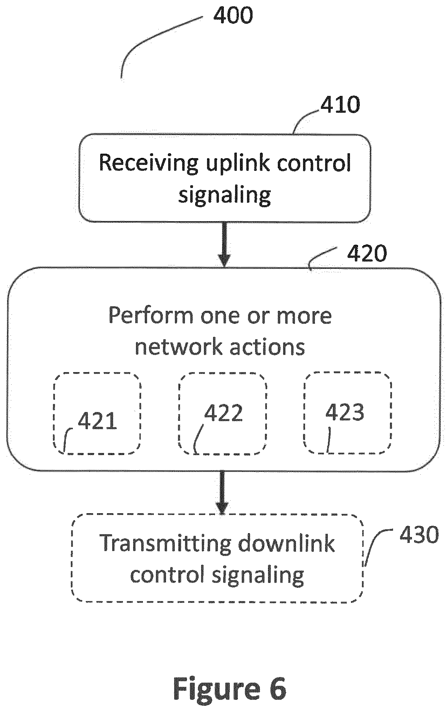

Figure 6 represents a flowchart of a further claimed method 400 for use in a network node 5 of a wireless network 2 and/or a first device 7 according to various examples.

Hereby, the UE 1 is adapted to communicate with the wireless network 2 using on a plurality of RATs.

At 410, an uplink control signaling 3 indicative of at least one prioritized RAT prioritized from a plurality of RATs is received from the UE 1. Hereby, the uplink control signaling 3 may be included in a) a UE capability signaling and/or b) a UE uplink control signal and/or c) a RRC configuration message. Further, the uplink control signaling 3 may include a list of at least one RAT, which is not prioritized.

At 420, one or more network actions is performed. The one or more network actions are performed in consideration of the prioritized at least one RAT. In other words, the one or more network actions take the prioritized at least one RAT into account, or the network actions are performed based on the prioritized at least one RAT. Stated differently, communication in the network performed subsequent to the receiving and associated with the UE, is based on the prioritized at least one RAT. Consequently, it may be possible to take into account the prioritized at least one RAT when operating the network 2. This may help align the operation of the network 2 with the indication of the UE 2 that the prioritized at least one RAT is preferred.

As a general rule, various options for performing the one or more network actions in consideration of the at least one RAT may be employed or in combination.

In one example, performing the one or more network actions may correspond to triggering to establish a data connection with the UE 1 based on the prioritized at least one RAT The one or more network actions may, in a further example, comprise accepting or not accepting 421 the prioritized at least one RAT. Further, the one or more network actions may comprise instructing 422 the UE 1 to perform cell measurements based on the prioritized at least one RAT. Further, the one or more network actions may comprise allocating 423 radio resources for communicating with the UE 1 based on the prioritized at least one RAT.

It is generally possible that the one or more network actions are selected from the group comprising: performing paging of the UE 2; Establishing a data connection with the UE 2; responding, to the UE 2, with approval or denial of the indication of the prioritized at least one RAT - i.e., accepting or not accepting the prioritized at least one RAT; providing a configuration of for cell measurement, e.g., bandwidths, center frequencies, subcarrier spacings, etc..; performing a handover, e.g., a inter-RAT handover; performing a redirect to trigger camping of the UE on another cell, e.g., operating according to another RAT; only accept UE initiated access attempts.

For example, it would be possible that one or more network actions are performed in order to facilitate establishment of the data connection with the UE 2 employing the prioritized at least one RAT. This may include performing an inter-RAT handover and/or cell measurements. For example, the cell measurements may be configured in accordance with the prioritized at least one RAT: here, a subcarrier spacing or a frequency bandwidth may be set according to operating parameters of the prioritized at least one RAT. By performing a redirect, the UE 2 operating in idle state can be controlled such that it starts camping on a cell operating according to the prioritized at least one RAT.

Subsequently at 430, the downlink control signaling 4 may be transmitted to the UE 1 in response to the uplink control signaling 3 and indicative of whether the prioritized at least one RAT is accepted.

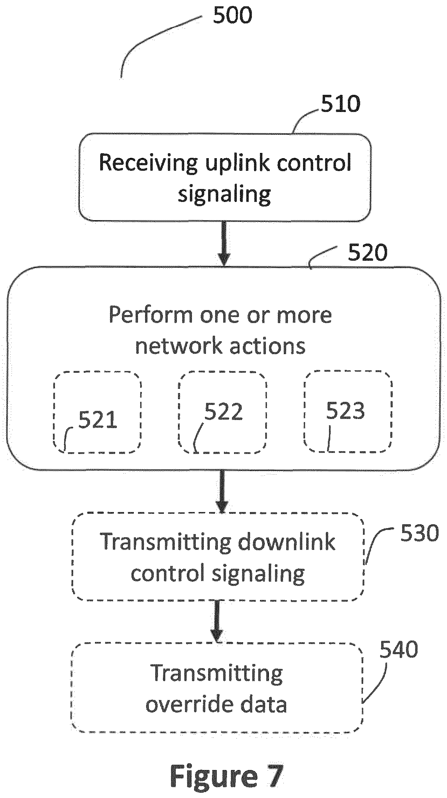

Figure 7 represents a flowchart of a further method 500 for use in a network node 5 of a wireless network 2 according to various examples. Hereby, receiving uplink control signaling 510, performing one or more network actions in consideration of the prioritized at least one RAT 520 and transmitting downlink control signaling 530 may be performed similarly or even equally to receiving uplink control signaling 410, performing one or more network actions in consideration of the prioritized at least one RAT 420 and transmitting downlink control signaling 430 of the method 400 according to Figure 6.

Subsequently at 540, further downlink control signaling 4 may be transmitted. Such further downlink control signaling 4 may comprise override data and may refer to an environmental change of the UE 1. Hereby, these override data may induce an adaption of whether cell measurements are performed based on the prioritized at least one RAT or based on the plurality of RATs.

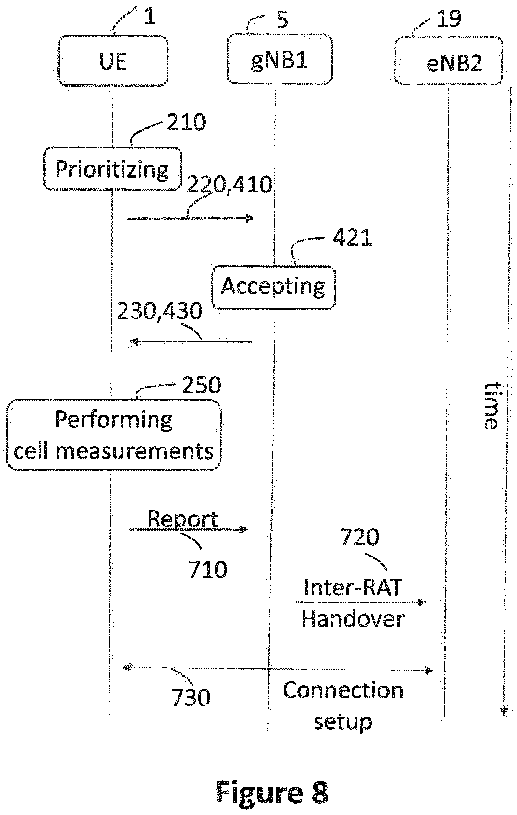

Figure 8 schematically illustrates a signaling diagram of a UE 1, a first network node (gNB1) 5 of a first wireless network 2 and a further network node (gNB2) 19 of a further wireless network 20 according to various examples. The signaling diagram may refer to perform any method 200 for use in a UE 1 according to Figure 4 as well as to perform any method 400 for use in a network node 5 of a wireless network 2. Herein, a downward arrow representing a time scale referring to these method 200, 400 is implemented.

At 210, the UE may prioritize RAT technologies as explained with respect to Figure 4.

Subsequently at 220, the UE may transmit uplink control signaling 3 as explained with respect to Figure 4. At 410, the uplink control signaling 3 may then be received by the network node 5 of the wireless network 2 as explained with respect to Figure 6.

Subsequently at 421, the prioritized at least one RAT may be accepted by the network node 5 as explained with respect to Figure 6.

Subsequently at 430, the downlink control signaling 4 may then be transmitted to the UE 1. At 230, the downlink control signaling 4 may then be received by the UE 1.

Subsequently at 250, the UE 1 may then perform cell measurements as explained with respect to Figure 4.

Subsequently, the UE 1 may report on the performed cell measurements to the network node 5 of the wireless network 2, 710. Based on this report, the wireless network 2 may or may not transmit an inter-RAT handover command to the further network node 19 of the further wireless network 20, 7250. For example, if the cell measurements indicate a good signal-to-interference-and-noise ratio for the prioritized at least one RAT, the inter-RAT handover command may be transmitted. Otherwise, the inter-RAT handover may be aborted. The scenario of Figure 8 may be applicable where the prioritized at least one RAT is not supported by the network node 5, but rather by the further network node 19. By means of the inter-RAT handover command, the UE 1 triggers establishment of the connection based on the prioritized at least one RAT.

Subsequently and based on the transmission of this inter-RAT handover command, a connection setup in between the UE 1 and the further network node 19 may be established, 730.

## Claims

1. A method (100, 200, 300) performed by a user equipment (1), the user equipment (1) being adapted to communicate with a wireless network (2) using a plurality of radio access technologies, the method (100, 200, 300) comprising:
prioritizing (110, 210, 310) at least one radio access technology from the plurality of radio access technologies; and
transmitting (120, 220, 320) uplink control signaling (3) indicative of the prioritized at least one radio access technology to the wireless network (2),
wherein,
prioritizing the at least one radio access technology supported by the user equipment is based on a network access state comprising one of: an idle network access state, an inactive network access state and an active network access state.

2. The method (100, 200, 300) of claim 1, further comprising receiving (130, 230, 330) downlink control signaling (4) from the wireless network (2) in response to transmitting (120, 220, 330) the uplink control signaling (3), wherein the downlink control signaling (4) is indicative of whether the prioritized at least one radio access technology is accepted or not.

3. The method (100, 200, 300) of claim 2, further comprising performing (150) data communication based on the prioritized at least one radio access technology and in accordance with the downlink control signaling (4).

4. The method (100, 200, 300) of claim 2, further comprising performing (250, 350) cell measurements in accordance with the received downlink control signaling (4), wherein the cell measurements are performed (251, 351) based on the prioritized at least one radio access technology, upon the prioritized at least one radio access technology being acknowledged or wherein the cell measurements are performed (252, 352) based on the plurality of radio access technologies, upon the prioritized at least one radio access technology not being acknowledged wherein the method optionally further comprises receiving (360) further downlink control signaling (4), wherein the further downlink control signaling (4) comprises override data, which induce an adaption of whether the cell measurements are performed (380) based on the prioritized at least one radio access technology (381) or based on the plurality of radio access technologies (382).

5. The method (100, 200, 300) of any one of the preceding claims, wherein prioritizing the at least one radio access technology is further based on at least one of an energy consumption, a security level, a geolocation, a timing, a service type; and a quality of service, wherein the uplink control signaling (3) is optionally indicative of the at least one of the energy consumption, the network access state, the security level, the geolocation, the timing, the service type; and the quality of service.

6. The method (100, 200, 300) of any one of the preceding claims, wherein the uplink control signaling (3) is included in a) a user equipment capability signaling and/or b) a user equipment uplink control signal and/or c) a RRC configuration message.

7. The method (100, 200, 300) of any one of the preceding claims, wherein the uplink control signaling (3) includes a list of at least one radio access technology which is not prioritized.

8. The method (100, 200, 300) of any one of the preceding claims, wherein said prioritizing (110, 210, 310) of the at least one radio access technology is performed differently for at least two of a) the idle network access state, b) the inactive network access state and c) the active network access state of the user equipment (1).

9. A method (400, 500) performed by a network node (5) of a wireless network (2) connectable to a user equipment (1) which is adapted to communicate with the wireless network (2) using a plurality of radio access technologies, the method comprising:
receiving (410, 510), from the user equipment (1), uplink control signaling (3) indicative of at least one prioritized radio access technology prioritized from a plurality of radio access technologies, and
considering the at least one prioritized radio access technology when performing at least one network action (420, 520) associated with the user equipment (1),
wherein,
the at least one prioritized radio access technology is prioritized from the plurality of radio access technologies based on a network access state comprising one of: an idle network access state, an inactive network access state, and an active network access state.

10. The method (400, 500) of claim 9, wherein the at least one network action comprises accepting or not accepting (421, 521) the prioritized at least one radio access technology, further comprising transmitting (430, 530) downlink control signaling (4) to the user equipment (1) in response to the uplink control signaling (3) and indicative of whether the at least one prioritized radio access technology is accepted.

11. The method (400, 500) of any one of claims 9 to 10, wherein the at least one network action comprises instructing (422, 522) the user equipment (1) to perform cell measurements based on the at least one prioritized radio access technology.

12. The method (400, 500) of any one of claims 9 to 11, wherein the at least one network action comprises allocating (423, 523) radio resources for communicating with the user equipment (1) based on the at least one prioritized radio access technology.

13. The method (500) of any one of claims 9 to 12, further comprising transmitting (540) further downlink control signaling (4) comprising override data, which induce an adaption of whether cell measurements are performed based on the prioritized at least one radio access technology or based on the plurality of radio access technologies.

14. The method (400, 500) of any one of claims 9 to 13, wherein the uplink control signaling (3) is included in a) a user equipment capability signaling and/or b) a user equipment uplink control signal and/or c) a RRC configuration message, and/or wherein the uplink control signaling (3) includes a list of at least one radio access technology which is not prioritized.

15. The method (400, 500) of any one of claims 9 to 14, wherein the at least one network action comprises transmitting an inter-radio access technology handover command to a further network node (19).

## Patentansprüche

1. Verfahren (100, 200, 300), das von einer Benutzerausrüstung (1) durchgeführt wird, wobei die Benutzerausrüstung (1) dazu angepasst ist, mit einem drahtlosen Netzwerk (2) unter Verwendung einer Vielzahl von Funkzugangstechnologien zu kommunizieren, das Verfahren (100, 200, 300) umfassend:
Priorisieren (110, 210, 310) mindestens einer Funkzugangstechnologie aus der Vielzahl von Funkzugangstechnologien; und
Übertragen (120, 220, 320) einer Uplink-Steuersignalisierung (3), die die priorisierte mindestens eine Funkzugangstechnologie angibt, an das drahtlose Netzwerk (2),
wobei
Priorisieren der mindestens einen durch die Benutzerausrüstung unterstützten Funkzugangstechnologie auf einem Netzwerkzugangszustand basiert, umfassend eines von: einem ruhenden Netzwerkzugangszustand, einem inaktiven Netzwerkzugangszustand und einem aktiven Netzwerkzugangszustand.

2. Verfahren (100, 200, 300) nach Anspruch 1, ferner umfassend Empfangen (130, 230, 330) einer Downlink-Steuersignalisierung (4) von dem drahtlosen Netzwerk (2) als Reaktion auf das Übertragen (120, 220, 330) der Uplink-Steuersignalisierung (3), wobei die Downlink-Steuersignalisierung (4) angibt, ob die priorisierte mindestens eine Funkzugangstechnologie akzeptiert wird oder nicht.

3. Verfahren (100, 200, 300) nach Anspruch 2, ferner umfassend Durchführen (150) von Datenkommunikation basierend auf der priorisierten mindestens einen Funkzugangstechnologie und gemäß der Downlink-Steuersignalisierung (4).

4. Verfahren (100, 200, 300) nach Anspruch 2, ferner umfassend Durchführen (250, 350) von Zellmessungen gemäß der empfangenen Downlink-Steuersignalisierung (4), wobei die Zellmessungen basierend auf der priorisierten mindestens einen Funkzugangstechnologie durchgeführt werden (251, 351), nachdem die priorisierte mindestens eine Funkzugangstechnologie bestätigt wird, oder wobei die Zellmessungen basierend auf der Vielzahl von Funkzugangstechnologien durchgeführt werden (252, 352), nachdem die priorisierte mindestens eine Funkzugangstechnologie nicht bestätigt wird, wobei das Verfahren optional ferner das Empfangen (360) einer weiteren Downlink-Steuersignalisierung (4) umfasst, wobei die weitere Downlink-Steuersignalisierung (4) Überschreibungsdaten umfasst, die eine Anpassung dahingehend herbeiführen, ob die Zellmessungen basierend auf der priorisierten mindestens einen Funkzugangstechnologie (381) oder basierend auf der Vielzahl von Funkzugangstechnologien (382) durchgeführt werden (380).

5. Verfahren (100, 200, 300) nach einem der vorstehenden Ansprüche, wobei das Priorisieren der mindestens einen Funkzugangstechnologie ferner auf mindestens einem von einem Energieverbrauch, einer Sicherheitsstufe, einer Geolokalisierung, einem Zeitpunkt, einem Diensttyp und einer Dienstgüte basiert, wobei die Uplink-Steuersignalisierung (3) optional das mindestens eine von dem Energieverbrauch, dem Netzwerkzugangszustand, der Sicherheitsstufe, der Geolokalisierung, dem Zeitpunkt, dem Diensttyp und der Dienstgüte angibt.

6. Verfahren (100, 200, 300) nach einem der vorstehenden Ansprüche, wobei die Uplink-Steuersignalisierung (3) in a) einer Benutzerausrüstung-Fähigkeitssignalisierung und/oder b) einem Benutzerausrüstung-Uplink-Steuersignal und/oder c) einer RRC-Konfigurationsnachricht eingeschlossen ist.

7. Verfahren (100, 200, 300) nach einem der vorstehenden Ansprüche, wobei die Uplink-Steuersignalisierung (3) eine Liste von mindestens einer Funkzugangstechnologie einschließt, die nicht priorisiert ist.

8. Verfahren (100, 200, 300) nach einem der vorstehenden Ansprüche, wobei das Priorisieren (110, 210, 310) der mindestens einen Funkzugangstechnologie für mindestens zwei von a) dem ruhenden Netzwerkzugangszustand, b) dem inaktiven Netzwerkzugangszustand und c) dem aktiven Netzwerkzugangszustand der Benutzerausrüstung (1) unterschiedlich durchgeführt wird.

9. Verfahren (400, 500), das von einem Netzwerkknoten (5) eines drahtlosen Netzwerks (2) durchgeführt wird, das mit einer Benutzerausrüstung (1) verbindbar ist, die dazu angepasst ist, mit dem drahtlosen Netzwerk (2) unter Verwendung einer Vielzahl von Funkzugangstechnologien zu kommunizieren, das Verfahren umfassend:
Empfangen (410, 510), von der Benutzerausrüstung (1), einer Uplink-Steuersignalisierung (3) die mindestens eine priorisierte Funkzugangstechnologie angibt, die aus einer Vielzahl von Funkzugangstechnologien priorisiert ist; und
Berücksichtigen der mindestens einen priorisierten Funkzugangstechnologie beim Durchführen mindestens einer Netzwerkaktion (420, 520), die der Benutzerausrüstung (1) zugeordnet ist,
wobei
die mindestens eine priorisierte Funkzugangstechnologie aus der Vielzahl von Funkzugangstechnologien basierend auf einem Netzwerkzugangszustand priorisiert wird, umfassend einen von: einem ruhenden Netzwerkzugangszustand, einem inaktiven Netzwerkzugangszustand und einem aktiven Netzwerkzugangszustand.

10. Verfahren (400, 500) nach Anspruch 9, wobei die mindestens eine Netzwerkaktion das Akzeptieren oder Nicht-Akzeptieren (421, 521) der priorisierten mindestens einen Funkzugangstechnologie umfasst, ferner umfassend Übertragen (430, 530) der Downlink-Steuersignalisierung (4) an die Benutzerausrüstung (1) als Reaktion auf die Uplink-Steuersignalisierung (3), wobei diese angibt, ob die mindestens eine priorisierte Funkzugangstechnologie akzeptiert wird.

11. Verfahren (400, 500) nach einem der Ansprüche 9 bis 10, wobei die mindestens eine Netzwerkaktion das Anweisen (422, 522) der Benutzerausrüstung (1) umfasst, Zellmessungen basierend auf der mindestens einen priorisierten Funkzugangstechnologie durchzuführen.

12. Verfahren (400, 500) nach einem der Ansprüche 9 bis 11, wobei die mindestens eine Netzwerkaktion das Zuweisen (423, 523) von Funkressourcen zum Kommunizieren mit der Benutzerausrüstung (1) basierend auf der mindestens einen priorisierten Funkzugangstechnologie umfasst.

13. Verfahren (500) nach einem der Ansprüche 9 bis 12, ferner umfassend Übertragen (540) einer weiteren Downlink-Steuersignalisierung (4), die Überschreibungsdaten umfasst, die eine Anpassung dahingehend herbeiführen, ob Zellmessungen basierend auf der priorisierten mindestens einen Funkzugangstechnologie oder basierend auf der Vielzahl von Funkzugangstechnologien durchgeführt werden.

14. Verfahren (400, 500) nach einem der Ansprüche 9 bis 13, wobei die Uplink-Steuersignalisierung (3) in a) einer Benutzerausrüstung-Fähigkeitssignalisierung und/oder b) einem Benutzerausrüstung-Uplink-Steuersignal und/oder c) einer RRC-Konfigurationsnachricht eingeschlossen ist und/oder wobei die Uplink-Steuersignalisierung (3) eine Liste mindestens einer Funkzugangstechnologie einschließt, die nicht priorisiert ist.

15. Verfahren (400, 500) nach einem der Ansprüche 9 bis 14, wobei die mindestens eine Netzwerkaktion das Übertragen eines Inter-Funkzugangstechnologie-Übergabebefehls an einen weiteren Netzwerkknoten (19) umfasst.

## Revendications

1. Procédé (100, 200, 300) réalisé par un équipement utilisateur (1), l'équipement utilisateur (1) étant adapté à communiquer avec un réseau sans fil (2) à l'aide d'une pluralité de technologies d'accès radio, le procédé (100, 200, 300) comprenant :
la priorisation (110, 210, 310) d'au moins une technologie d'accès radio parmi la pluralité de technologies d'accès radio ; et
la transmission (120, 220, 320) d'une signalisation de commande de liaison montante (3) indiquant l'au moins une technologie d'accès radio priorisée au réseau sans fil (2),
dans lequel,
la priorisation de l'au moins une technologie d'accès radio prise en charge par l'équipement utilisateur est basée sur un état d'accès au réseau comprenant l'un parmi : un état d'accès au réseau de veille, un état d'accès au réseau inactif et un état d'accès au réseau actif.

2. Procédé (100, 200, 300) selon la revendication 1, comprenant en outre la réception (130, 230, 330) d'une signalisation de commande de liaison descendante (4) en provenance du réseau sans fil (2) en réponse à la transmission (120, 220, 330) de la signalisation de commande de liaison montante (3), dans lequel la signalisation de commande de liaison descendante (4) indique si l'au moins une technologie d'accès radio priorisée est acceptée ou non.

3. Procédé (100, 200, 300) selon la revendication 2, comprenant en outre la réalisation (150) d'une communication de données sur la base de l'au moins une technologie d'accès radio priorisée et conformément à la signalisation de commande de liaison descendante (4).

4. Procédé (100, 200, 300) selon la revendication 2, comprenant en outre la réalisation (250, 350) de mesures de cellule conformément à la signalisation de commande de liaison descendante (4) reçue, dans lequel les mesures de cellule sont réalisées (251, 351) sur la base de l'au moins une technologie d'accès radio priorisée, lorsque l'au moins une technologie d'accès radio priorisée est acquittée ou dans lequel les mesures de cellule sont réalisées (252, 352) sur la base de la pluralité de technologies d'accès radio, lorsque l'au moins une technologie d'accès radio priorisée n'est pas acquittée dans lequel le procédé comprend en outre éventuellement la réception (360) d'une signalisation de commande de liaison descendante (4) supplémentaire, dans lequel la signalisation de commande de liaison descendante (4) supplémentaire comprend des données de dérogation, qui induisent une adaptation du fait de savoir si les mesures de cellule sont réalisées (380) sur la base de l'au moins une technologie d'accès radio priorisée (381) ou sur la base de la pluralité de technologies d'accès radio (382).

5. Procédé (100, 200, 300) selon l'une quelconque des revendications précédentes, dans lequel la priorisation de l'au moins une technologie d'accès radio est en outre basée sur au moins l'un parmi une consommation d'énergie, un niveau de sécurité, une géolocalisation, une synchronisation, un type de service ; et une qualité de service, dans lequel la signalisation de commande de liaison montante (3) indique éventuellement l'au moins un parmi la consommation d'énergie, l'état d'accès au réseau, le niveau de sécurité, la géolocalisation, la synchronisation, le type de service ; et la qualité de service.

6. Procédé (100, 200, 300) selon l'une quelconque des revendications précédentes, dans lequel la signalisation de commande de liaison montante (3) est incluse dans a) une signalisation de capacité d'équipement utilisateur et/ou b) un signal de commande de liaison montante d'équipement utilisateur et/ou c) un message de configuration RRC.

7. Procédé (100, 200, 300) de l'une quelconque des revendications précédentes, dans lequel la signalisation de commande de liaison montante (3) comporte une liste d'au moins une technologie d'accès radio qui n'est pas priorisée.

8. Procédé (100, 200, 300) selon l'une quelconque des revendications précédentes, dans lequel ladite priorisation (110, 210, 310) de l'au moins une technologie d'accès radio est réalisée différemment pour au moins deux parmi a) l'état d'accès au réseau de veille, b) l'état d'accès au réseau inactif et c) l'état d'accès au réseau actif de l'équipement utilisateur (1).

9. Procédé (400, 500) réalisé par un nœud de réseau (5) d'un réseau sans fil (2) pouvant être connecté à un équipement utilisateur (1) qui est adapté à communiquer avec le réseau sans fil (2) à l'aide d'une pluralité de technologies d'accès radio, le procédé comprenant :
la réception (410, 510), en provenance de l'équipement utilisateur (1), d'une signalisation de commande de liaison montante (3) indiquant au moins une technologie d'accès radio priorisée, priorisée parmi une pluralité de technologies d'accès radio ; et
le fait prendre en compte l'au moins une technologie d'accès radio priorisée lors de la réalisation d'au moins une action de réseau (420, 520) associée à l'équipement utilisateur (1),
dans lequel,
l'au moins une technologie d'accès radio priorisée est priorisée parmi la pluralité de technologies d'accès radio sur la base d'un état d'accès au réseau comprenant l'un parmi : un état d'accès au réseau de veille, un état d'accès au réseau inactif, et un état d'accès au réseau actif.

10. Procédé (400, 500) selon la revendication 9, dans lequel l'au moins une action de réseau comprend l'acceptation ou la non-acceptation (421, 521) de l'au moins une technologie d'accès radio priorisée, comprenant en outre la transmission (430, 530) d'une signalisation de commande de liaison descendante (4) à l'équipement utilisateur (1) en réponse à la signalisation de commande de liaison montante (3) et indiquant si l'au moins une technologie d'accès radio priorisée est acceptée.

11. Procédé (400, 500) selon l'une quelconque des revendications 9 à 10, dans lequel l'au moins une action de réseau comprend le fait de donner pour instruction (422, 522) à l'équipement utilisateur (1) de réaliser des mesures de cellule sur la base de l'au moins une technologie d'accès radio priorisée.

12. Procédé (400, 500) selon l'une quelconque des revendications 9 à 11, dans lequel l'au moins une action de réseau comprend l'attribution (423, 523) de ressources radio pour communiquer avec l'équipement utilisateur (1) sur la base de l'au moins une technologie d'accès radio priorisée.

13. Procédé (500) selon l'une quelconque des revendications 9 à 12, comprenant en outre la transmission (540) d'une signalisation de commande de liaison descendante (4) supplémentaire comprenant des données de dérogation, qui induisent une adaptation du fait de savoir si des mesures de cellule sont réalisées sur la base de l'au moins une technologie d'accès radio priorisée ou sur la base de la pluralité de technologies d'accès radio.

14. Procédé (400, 500) selon l'une quelconque des revendications 9 à 13, dans lequel la signalisation de commande de liaison montante (3) est incluse dans a) une signalisation de capacité d'équipement utilisateur et/ou b) un signal de commande de liaison montante d'équipement utilisateur et/ou c) un message de configuration RRC, et/ou dans lequel la signalisation de commande de liaison montante (3) comporte une liste d'au moins une technologie d'accès radio qui n'est pas priorisée.

15. Procédé (400, 500) selon l'une quelconque des revendications 9 à 14, dans lequel l'au moins une action de réseau comprend la transmission d'une instruction de transfert intercellulaire inter-technologies d'accès radio à un nœud de réseau (19) supplémentaire.
